# EUROPÄISCHE PATENTSCHRIFT

(11) **EP 2 282 085 B1**
(45) Veröffentlichungstag und Bekanntmachung des Hinweises auf die Patenterteilung: **14.12.2011**
(21) Anmeldenummer: 09009902.9
(22) Anmeldetag: 31.07.2009
(51) Int. Cl.: F16J 15/32, F16J 15/34

(54) **Dichtung und eine Dichtungsanordnung damit**
Seal and corresponding sealing assembly
Joint et dispositif d'étanchéité en étant équipé

(43) Veröffentlichungstag der Anmeldung: 09.02.2011
(73) Patentinhaber: Carl Freudenberg KG, 69469 Weinheim (DE)
(72) Erfinder: Dahlhaus-Preussler, Ulrich, 68535 Edingen-Neckarhausen (DE); Rettig, Roland, 69488 Birkenau (DE)

(56) Entgegenhaltungen:
- EP-A- 1 375 942
- DE-A1- 4 002 245
- DE-A1- 19 839 502
- DE-A1-102007 007 036
- US-A- 2 373 443
- US-A- 3 250 540
- US-A- 3 356 376
- US-A1- 2006 022 412

## Beschreibung

### Technisches Gebiet

Die Erfindung betrifft eine Dichtung und eine Dichtungsanordnung damit, umfassend einen Stützkörper und einen Dichtring mit zumindest einer Axialdichtlippe, wobei der Stützkörper und der Dichtring einander mit radialem Abstand benachbart zugeordnet und durch eine als Anpresselement für die Axialdichtlippe ausgebildete Schubfeder aus elastomerem Werkstoff verbunden sind, wobei die Schubfeder und der Stützkörper einen spitzen Winkel einschließen, der in Richtung der Axialdichtlippe offen ist, wobei der Axialdichtlippe radial innenseitig eine weitere erste Axialdichtlippe in einer funktionstechnischen Reihenschaltung nachgeschaltet ist und wobei der weiteren ersten Axialdichtlippe radial innenseitig eine weitere zweite Axialdichtlippe in einer funktionstechnischen Reihenschaltung nachgeschaltet ist.

### Stand der Technik

Dichtungen und Dichtungsanordnungen sind allgemein bekannt. Dichtungen sind beispielsweise als Radialwellendichtringe ausgebildet und in Bohrungen von Gehäusen statisch dichtend angeordnet. Die vorbekannten Radialwellendichtringe weisen zumindest eine dynamisch beanspruchte Dichtlippe auf, die eine abzudichtende Oberfläche einer abzudichtenden Welle unter elastischer Vorspannung dichtend umschließt.
Dichtungen werden außerdem beispielsweise als Wälzlagerdichtungen verwendet, um das im Wälzlager befindliche Schmiermittel gegenüber der Umgebung abzudichten. Die Dichtungen können auf jeder der beiden Stirnseiten des Wälzlagers innerhalb des Spalts zwischen dem Innen- und dem Außenring montiert sein.
Speziell die Abdichtung von Wälzlagern mit kleinen Abmessungen ist problematisch. Ringwendelfedern zur Anpressung der Dichtlippen an die abzudichtenden Flächen sind aus Platzgründen zumeist nicht verwendbar, während Dichtungen ohne Federelement zur Anpressung der Dichtlippen an die abzudichtenden Flächen oftmals wenig zufriedenstellende Abdichtungseigenschaften aufweisen.

Eine Dichtung, wie eingangs beschrieben, ist aus der US-A-2,373,443 bekannt. Zwischen den Stützkörper und dem Dichtring ist ein Anpresselement angeordnet, wobei die Axialdichtlippen des Dichtrings übereinstimmend ausgebildet und in einer Radialebene angeordnet sind. Die Axialdichtlippen berühren die abzudichtende Fläche gleichzeitig und mit übereinstimmender axialer Vorspannung.

Eine weitere Dichtung ist aus der US 2006/022412 A1 bekannt. Der Stützkörper und der Dichtring sind durch eine als Anpresselement für eine Axialdichtlippe ausgebildete Schubfeder aus elastomerem Werkstoff miteinander verbunden, wobei die Schubfeder und der Stützkörper einen spitzen Winkel einschließen, der in Richtung der Axialdichtlippe offen ist. Die vorbekannte Dichtung berührt die abzudichtende Fläche mit nur einer Axialdichtlippe.

Eine weitere Dichtung ist jeweils aus den Druckschriften US-A-3,250,540, US-A-3,356,376 und EP-A-1 375 942 bekannt. Die in diesen Druckschriften offenbarten Dichtungen weisen flächig ausgebildete Dichtbereiche auf, die abzudichtende Flächen unter axialer Vorspannung anliegend berühren. Die Anpresselemente für die Dichtbereiche sind als Schubfeder aus elastomerem Werkstoff ausgebildet, wobei die Dichtung aus der EP 1 375 942 A2 im Bereich ihrer Dichtfläche Rückfördereinrichtungen ausweisen kann.

Aus der DE 198 39 502 A1 ist ein Dichtring bekannt, der als Stangendichtung ausgebildet ist, umfassend zumindest zwei mit axialem Abstand zueinander benachbarte Dichtlippen, wobei nur die dem abzudichtenden Medium zugewandte erste Dichtlippe aus einem reibungsverringernden PFTE-Werkstoff besteht. Die Stangendichtung weist im gezeigten Ausführungsbeispiel drei Dichtlippen auf, die einander mit axialem Abstand benachbart zugeordnet sind, wobei die Durchmesser der Dichtlippen in Richtung der Umgebung erweitert sind. Während der bestimmungsgemäßen Verwendung des Dichtrings berühren alle drei Dichtungen die abzudichtende Fläche mit einer unterschiedlich starken elastischen Vorspannung. Dadurch soll eine Leckage auch dann verhindert werden, wenn die PFTE-Dichtlippe, die die abzudichtende Fläche mit der größten Vorspannung dichtend berührt, beschädigt ist.

Aus der DE 2007 007 036 A1 ist eine Dichtung bekannt, umfassend einen Tragkörper, an dem zumindest eine Dichtlippe befestigt ist, wobei die Dichtlippe zumindest einen magnetischen Abschnitt aufweist und wobei an dem Tragkörper ein elektromagnetisch wirksames Element angeordnet ist, welches mit dem magnetischen Abschnitt in Wirkverbindung steht. Die Dichtung ist als Radialwellendichtring ausgebildet und weist nur eine Dichtlippe auf.

### Darstellung der Erfindung

Der Erfindung liegt die Aufgabe zugrunde, eine Dichtung der eingangs genannten Art derart weiterzuentwickeln, dass diese gute Gebrauchseigenschaften während einer langen Gebrauchsdauer aufweist, insbesondere eine gute Abdichtung zwischen der Dichtlippe und der abzudichtenden Fläche, unabhängig von deren Drehrichtung. Außerdem sollen Reibung, unerwünscht Temperaturerhöhung und Verschleiß der Dichtlippe auf ein Minimum begrenzt sein.

Diese Aufgabe wird erfindungsgemäß mit den Merkmalen der Ansprüche 1, 3 und 13 gelöst. Auf vorteilhafte Ausgestaltungen nehmen die darauf jeweils rückbezogenen Unteransprüche Bezug.

Zur Lösung der Aufgabe ist eine Dichtung vorgesehen, umfassend einen Stützkörper und einen Dichtring mit zumindest einer Axialdichtlippe, wobei der Stützkörper und der Dichtring einander mit radialem Abstand benachbart zugeordnet und durch eine als Anpresselement für die Axialdichtlippe ausgebildete Schubfeder aus elastomerem Werkstoff verbunden sind, wobei die Schubfeder und der Stützkörper einen spitzen Winkel einschließen, der in Richtung der Axialdichtlippe offen ist, wobei der Axialdichtlippe radial innenseitig eine weitere erste Axialdichtlippe in einer funktionstechnischen Reihenschaltung nachgeschaltet ist und wobei der weiteren ersten Axialdichtlippe radial innenseitig eine weitere zweite Axialdichtlippe in einer funktionstechnischen Reihenschaltung nachgeschaltet ist, wobei die Axialdichtlippe, die weitere erste Axialdichtlippe und die weitere zweite Axialdichtlippe einer gedachten Radialebene mit stufenweise vergrößertem axialem Abstand benachbart zugeordnet sind. Bei einer derartigen Ausgestaltung ist von Vorteil, dass die für eine gute Abdichtung wichtige Funktion der Anpressung der Axialdichtlippe an die abzudichtende Fläche räumlich aus dem Dichtring ausgegliedert und in die Schubfeder verlagert ist. Auch sehr kompakte Dichtringe, die keinen Platz für eine Ringwendelfeder aufweisen würden, werden dadurch ausreichend an die abzudichtende Fläche angepresst. Die Schubfeder verläuft, im Längsschnitt betrachtet, sowohl im herstellungsbedingten als auch im eingebauten Zustand stetig zwischen dem Stützkörper und dem Dichtring.

Die erfindungsgemäße Dichtung weist einen einfachen und teilearmen Aufbau auf und ist daher in fertigungstechnischer und wirtschaftlicher Hinsicht problemlos und kostengünstig herstellbar. Der Verwendung eines separat ausgebildeten Federelements, wie beispielsweise einer Ringwendelfeder aus einem metallischen Werkstoff, bedarf es wegen der Schubfeder daher nicht. Die erfindungsgemäße Dichtung baut in axialer und radialer Richtung sehr klein und kann deshalb beispielsweise auch gut zur Abdichtung von sehr kleinen Wälzlagern zur Anwendung gelangen.

Das Dichtprinzip der beanspruchten Dichtung beruht nicht nur auf der Förderwinkung des abzudichtenden Mediums zurück in den abzudichtenden Raum bedingt durch die Geometrie der Axialdichtlippe, sondern zusätzlich auf dem Fördermechanismus Fliehkraft.
Der klassische Födermechanismus durch Verzerrung der Dichtkante, die die abzudichtende Oberfläche dichtend berührt, wird verstärkt durch den Zusatzmechanismus der Fliehkraft, die auf das abzudichtende Medium wirkt, das sich im Dichtspalt zwischen der Dichtlippe und der abzudichtenden Oberfläche befindet.
Dadurch, dass die Fliehkraft die Abdichtwirkung positiv beeinflusst, ist die erfindungsgemäße Dichtung besonders reibungsarm zu betreiben; eine übermäßig starke und deshalb verschleißintensive Anpressung der Axialdichtlippe an die abzudichtenden Fläche ist nicht erforderlich, um eine gute Abdichtung zu erzielen. Die Entstehung von Wärme und damit verbundener Verkokung des im Dichtspalt zwischen der Dichtlippe und der abzudichtenden Fläche befindlichen abzudichtenden Mediums wird dadurch auf ein Minimum reduziert, ebenso wie der Verschleiß der Dichtlippe.
Die beanspruchte Dichtung weist deshalb gleichbleibend gute Gebrauchseigenschaften während einer langen Gebrauchsdauer auf, wobei die Güte der Abdichtung durch die auf das abzudichtende Medium wirksame Fliehkraft praktisch unabhängig von der Drehrichtung der abzudichtenden Oberfläche ist. Eine auf Zug beanspruchte Schubfeder ist ebenfalls möglich, wird jedoch wegen erhöhter Reißempfindlichkeit und Setzneigung vermieden.

Eine erhöhte Robustheit der Dichtung, insbesondere in engen Einbaubäumen und bei kleinen Abmessungen, wird dadurch erreicht, dass der Axialdichtlippe radial innenseitig eine weitere erste Axialdichtlippe in einer funktionstechnischen Reihenschaltung nachgeschaltet ist. Der weiteren ersten Axialdichtlippe ist radial innenseitig eine weitere zweite Axialdichtlippe in einer funktionstechnischen Reihenschaltung nachgeschaltet.
Für manche Anwendungsfälle kann es von Vorteil sein, wenn der durch die Dichtlippen und die abzudichtende Oberfläche begrenzte Hohlraum mit einem Sperrfett befüllt ist. Die dem abzudichtenden Raum zugewandte Axialdichtlippe ist durch die nachgeschalteten weiteren Dichtlippen vor einer Beaufschlagung mit abrasiven Partikeln, beispielsweise vor einer Beaufschlagung mit Schmutz und Staub, besser geschützt, so dass die Standzeiten der Dichtung dadurch erhöht werden.

Die Axialdichtlippe, die weitere erste Axialdichtlippe und die weitere zweite Axialdichtlippe sind einer gedachten Radialebene mit stufenweise vergrößertem axialem Abstand benachbart zugeordnet. Hierbei ist von Vorteil, dass die Reibungsverluste durch eine solche Ausgestaltung reduziert sind. Mit zunehmendem Verschleiß der Axialdichtlippe legt sich zunächst die weitere erste Axialdichtlippe, anschließend die weitere zweite Axialdichtlippe mit verstärkter Anpressung an die abzudichtende Fläche an, so dass die vorteilhaften Gebrauchseigenschaften auch dann erhalten bleiben, wenn die Axialdichtlippe und/oder die weitere erste Axialdichtlippe bereits teilweise verschlissen sind.

In einem solchen Fall bilden die weitere erste Axialdichtlippe und die weitere zweite Axialdichtlippe jeweils Reservedichtlippen.

Nach einer anderen Ausgestaltung ist es zur Lösung derselben Aufgabe vorgesehen, dass die weitere erste Axialdichtlippe als Gleitringdichtung ausgebildet ist. Die Gleitringdichtung besteht zum Beispiel aus Siliciumcarbid und ist, verglichen mit den aus elastomerem Werkstoff bestehenden Axialdichtlippen, praktisch verschleißfrei. Die Gleitringdichtung bewirkt nicht nur eine gute Abdichtung des Dichtspalts; durch die Gleitringdichtung wird der Dichtring der Dichtung auf der abzudichtenden Oberfläche zusätzlich geführt.

Im herstellungsbedingten Zustand beträgt der Winkel, den die Schubfeder und der Stützkörper einschließen, bevorzugt 40° bis 80°, weiter bevorzugt 60°.
Die erfindungsgemäße Dichtung wird während ihrer Montage mit dem Stützkörper zunächst solange axial in Richtung ihrer endgültigen Einbauposition verschoben, bis die Axialdichtlippe die abzudichtende Fläche des abzudichtenden Maschinenelements anliegend berührt. Zu diesem Zeitpunkt ist die Schubfeder praktisch noch nicht verformt. Anschließend wird der Stützkörper in Montagerichtung weiter in seine endgültige Einbauposition bewegt, wobei die Schubfeder zunehmend gestaucht, der Winkel, den die Schubfeder und der Stützkörper einschließen, zunehmend größer und die axiale Vorspannung, mit der die Axialdichtlippe die abzudichtende Fläche berührt, ebenfalls zunehmend größer wird, bis die endgültige Position der Dichtung in ihrem Einbauraum erreicht ist. Dann sind der Winkel und auch die Stauchung der Schubfeder am größten.

Die Schubfeder kann - im herstellungsbedingten Zustand und im Längsschnitt betrachtet - ein Verhältnis von axialer Länge zu radialer Breite aufweisen, das 3 bis 1/3, bevorzugt 1 beträgt.
Durch die genannten Verhältnisse wird eine lineare Kennlinie und eine unerwünschte Knickung der Schubfeder unter Belastung vermieden und trotz geringerem Materialbedarf eine ausreichende axiale Anpressung der Axialdichtlippe an die abzudichtende Oberfläche erreicht.

Der Stützkörper kann einen Kern aus zähhartem Werkstoff aufweisen, der von einer ersten Ummantelung aus elastomerem Werkstoff vollständig oder teilweise umschlossen ist. Der Kern innerhalb des Stützkörpers ist vorteilhaft, um diesem eine ausreichende Formbeständigkeit zu geben. Relaxationen des Stützkörpers auch während einer sehr langen Gebrauchsdauer und ein unerwünschtes Wandern der Dichtung innerhalb ihres Einbauraums sowie daraus resultierende, sich unerwünscht verändernde Anpressungen der Axialdichtlippe an der abzudichtenden Oberfläche, sind dadurch ausgeschlossen.

Der Kern kann beispielsweise aus einem Ring aus metallischem Werkstoff bestehen; die vollständige Ummantelung aus elastomerem Werkstoff bewirkt einerseits eine statische Abdichtung des Stützkörpers im Einbauraum der Dichtung und andererseits einen Schutz, beispielsweise einen Korrosionsschutz, für den Kern.
Die teilweise Ummantelung bewirkt einen metallischen Haftsitz im Einbauraum.

Der Dichtring kann einen Versteifungsring aufweisen, der innerhalb des Dichtrings axial benachbart zur Axialdichtlippe angeordnet ist und deren radiale Erstreckung in radialer Richtung überdeckt, wobei der Versteifungsring von einer zweiten Ummantelung aus elastomerem Werkstoff vollständig oder teilweise umschlossen ist. Der Versteifungsring verbessert die Formstabilität des Dichtrings und dadurch die räumliche Zuordnung der Axialdichtlippe bezogen auf die abzudichtende Fläche. Eine während der Gebrauchsdauer unveränderliche räumliche Zuordnung der Axialdichtlippe bezogen auf die abzudichtende Oberfläche begünstigt gleichbleibend gute Gebrauchseigenschaften während einer langen Gebrauchsdauer erheblich. Außerdem ist der Versteifungsring in fertigungstechnischer Hinsicht von Vorteil, weil dadurch große Anhäufungen von elastomerem Werkstoff, die während der Herstellung der Dichtung zu Lunkern führen können, vermieden werden. Die Maßhaltigkeit des Dichtrings wird durch den Versteifungsring insgesamt verbessert.

Der Versteifungsring kann generell aus einem zähharten Werkstoff, beispielsweise aus einem metallischen oder einem polymeren Werkstoff bestehen.
Ein Versteifungsring aus einem polymeren Werkstoff hat den Vorteil, dass der Versteifungsring und dadurch der Dichtring insgesamt eine geringe Masse aufweisen und daraus resultierend eine geringe Massenträgheit, so dass der Dichtring dadurch besonders gut an der abzudichtenden Fläche anliegt, zum Beispiel auch dann, wenn diese nicht ganz eben ist und/oder eine Unwucht aufweist.

Nach einer anderen Ausgestaltung besteht die Möglichkeit, dass der Versteifungsring aus einem ferromagnetischen Werkstoff besteht. Hierbei ist von Vorteil, dass auf der der Axiatdichtlippe axial abgewandten Seite ein schaltbarer Magnetgeber vorgesehen sein kann, zur bedarfsweisen Erhöhung oder Reduzierung der Anpresskraft der zumindest einen Axialdichtlippe. Ein solcher schaltbarer Dichtring ist beispielsweise dann von Vorteil, wenn die Anpress kraft und Reibverlustleistung gesteuert beziehungsweise geregelt werden soll, der Dichtkantenverschleiß nach einer gewissen Lebensdauer kompensiert werden soll, eine weitere, zusätzliche Dichtkante nach einer gewissen Lebensdauer oder bei Leckage hinzu geschaltet werden soll oder dieselbe Dichtung für unterschiedliche Anwendungsfälle eingesetzt werden soll.

Die zweite Ummantelung aus elastomerem Werkstoff schützt den Versteifungsring vor äußeren Einflüssen.

Die Schubfeder, die Axialdichtlippe und die beiden Ummantelungen können einstückig ineinander übergehend und materialeinheitlich ausgebildet sein. Insgesamt weist die Dichtung dadurch einen teilearmen und einfachen Aufbau auf und ist in fertigungstechnischer und wirtschaftlicher Hinsicht einfach und kostengünstig herstellbar.

Die Axialdichtlippe kann einen Einfach- oder bidirektionalen Rückförderdrall für ein abzudichtendes Medium radial nach außen aufweisen. Einen Einfachdrall gelangt bei einer festen Drehrichtung, ein Wechseldrall bei verschiedenen Drehrichtungen zur Anwendung. Durch den Rückförderdrall wird der klassische Fördermechanismus durch Verzerrung der Dichtlippe und der Fördermechanismus Fliehkraft," unterstützt, so dass eine gute Dichtwirkung ohne Reibungs- und Erwärmungsprobleme im Bereich der Dichtlippe auch dann erzielt werden kann, wenn beispielsweise aufgrund geringer Drehzahlen der abzudichtenden Oberfläche die Fliehkräfte vergleichsweise klein sind.

Die Axialdichtlippe kann durch zwei einander durchschneidende Kegelflächen begrenzt sein, wobei die radial innere erste Kegelfläche mit einer gedachten Radialebene, die einer abzudichtenden Oberfläche entspricht, einen ersten Winkel einschließt, der kleiner ist als ein zweiter Winkel, den die radial äußere Kegelfläche mit der gedachten Radialebene einschließt. Diese Geometrie der Dichtlippe ist beispielsweise von Radialwellendichtringen bekannt und sorgt einerseits für eine ausreichende Schmierung der Dichtlippe und dadurch für geringen Verschleiß und andererseits für eine gute Dichtwirkung durch den klassischen Fördermechanismus durch Verzerrung der Dichtlippe während der Benutzung.

Alle Axialdichtlippen können einen entsprechend ausgebildeten Rückförderdrall und entsprechend ausgebildete erste und zweite Kegelflächen aufweisen. Außerdem betrifft die Erfindung eine Dichtungsanordnung, umfassend eine Dichtung wie zuvor beschrieben, wobei der Winkel während der bestimmungsgemäßen Verwendung der Dichtung 50° bis 90° beträgt. Mit zunehmender Verlagerung des Stützkörpers in Montagerichtung wird die Schubfeder gestaucht und der Winkel allmählich auf einen der zuvor genannten Werte vergrößert. Während der bestimmungsgemäßen Verwendung der Dichtungsanordnung ersetzt die Schubfeder zum Beispiel herkömmliche Ringwendelfedern aus metallischem Werkstoff und sorgt unter allen Betriebsbedingungen für eine ausreichende Anpressung der Axialdichtlippen an der abzudichtenden Fläche. Die abzudichtende Fläche wird bevorzugt durch den Radialflansch eines Laufrings gebildet, wobei zumindest die Axialdichtlippe oder die Axialdichtlippe und die Gleitringdichtung die abzudichtende Fläche unter elastischer axialer Vorspannung dichtend berühren. Wenn die weitere erste Axialdichtlippe aus einem elastomeren Werkstoff besteht und nicht durch die Gleitringdichtung gebildet ist, kann diese Axialdichtlippe und die weitere zweite Axialdichtlippe der abzudichtenden Fläche jeweils mit axialem Abstand benachbart zugeordnet sein. Reibung, daraus resultierende Temperaturerhöhung und Verschleiß werden dadurch auf ein Minimum begrenzt.
In Abhängigkeit vom jeweiligen Anwendungsfall kann es jedoch auch vorteilhaft sein, dass die Axialdichtlippen die abzudichtende Fläche mit gleicher axialer Vorspannung oder mit voneinander abweichender axialer Vorspannung berühren, zum Beispiel derart, dass die axiale Anpressung von der Axialdichtlippe über die weitere erste Axialdichtlippe bis zur weiteren zweiten Axialdichtlippe jeweils sprunghaft reduziert ist.

Wie zuvor bereits beschrieben, kann dem ferromagnetischen Versteifungsring auf der der Axialdichtlippe axial abgewandten Seite ein schaltbarer Magnetgeber zur bedarfsweisen Erhöhung oder Reduzierung der Anpresskraft der zumindest einen Axialdichtlippe zugeordnet sein. Der Magnetgeber und die Schubfeder sind in einer funktionstechnischen Parallelschaltung angeordnet. Durch eine derartige Ausgestaltung besteht die Möglichkeit, dieselbe Dichtung für unterschiedliche Anwendungsfälle einzusetzen, beispielsweise dann, wenn die abzudichtende Fläche mit unterschiedlichen Drehzahlen rotiert und/oder das abzudichtende Medium, beispielsweise abhängig von dessen Temperatur, unterschiedliche Viskositäten aufweist. Durch eine solche Ausgestaltung ergibt sich also eine besonders gute Anpassung an die jeweiligen Gegebenheiten des Anwendungsfalls.

Der Laufring besteht bevorzugt aus einem rostfreien Edelstahl. Das ist von Vorteil, wenn im Laufe der Gebrauchsdauer der Dichtung/der Dichtungsanordnung die weitere erste und/oder weitere zweite Axialdichtlippe in dichtenden Kontakt mit dem Radialflansch des Laufrings kommt Auch bei langer Gebrauchsdauer der Dichtung/der Dichtungsanordnung ist dadurch Korrosion auf der abzudichtenden Fläche des Radialflanschs ausgeschlossen und damit unerwünscht hoher, reibungsbedingter Verschleiß der weiteren ersten und/oder weiteren zweiten Axialdichtlippe.

### Kurzbeschreibung der Zeichnung

Vier Ausführungsbeispiele der erfindungsgemäßen Dichtungsanordnung, die die erfindungsgemäße Dichtung umfasst, werden nachfolgend anhand der schematisch dargestellten Figuren 1 bis 4 näher erläutert. Diese zeigen:
- Fig. 1: ein erstes Ausführungsbeispiel, wobei die Dichtung sowohl im herstel- lungsbedingten als auch im montierten Zustand gezeigt ist,
- Fig. 2: die Axialdichtlippen aus Fig. 1 in abgewandelter Form,
- Fig. 3: die Axialdichtlippen aus Fig. 2, wobei die weitere erste Axialdichtlippe als Gleitringdichtung ausgebildet ist,
- Fig. 4: die dem abzudichtenden Raum axial abgewandte Dichtungsanordnung umfasst einen Versteifungsring aus einem ferromagnetischen Werkstoff, dem auf der der Axialdichtlippe axial abgewandten Seite ein schaltbarer Magnetgeber zugeordnet ist.
- Fig. 5: zwei funktionstechnisch in Reihe verbaute Dichtungsanordnungen, wobei die dem abzudichtenden Raum axial abgewandte zweite Dichtungsanordnung einen Versteifungsring aus einem ferro- magnetischen Werkstoff umfasst, dem auf der der Axialdichtlippe axial abgewandten Seite ein schaltbarer Magnetgeber zugeordnet ist.

### Ausführung der Erfindung

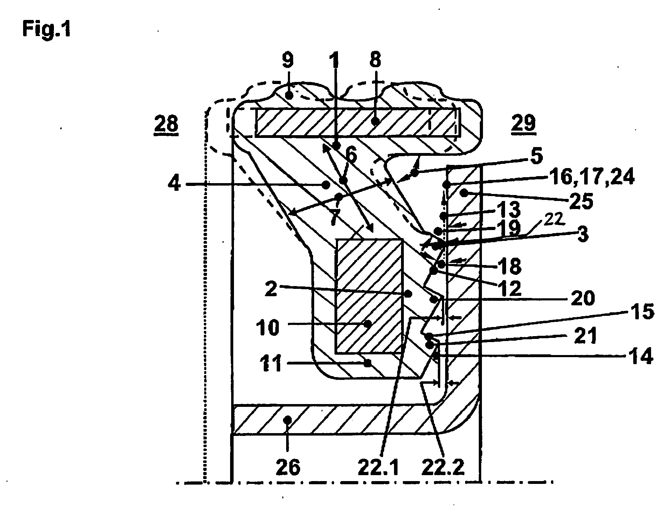

In Fig. 1 ist ein erstes generelles Ausführungsbeispiel der erfindungsgemäßen Dichtungsanordnung gezeigt, das die erfindungsgemäße Dichtung umfasst. Im hier gezeigten Ausführungsbeispiel umfasst die Dichtung einen Stützkörper 1 und einen Dichtring 2, wobei der Stützkörper 1 den Dichtring 2 mit radialem Abstand außenumfangsseitig umschließt und wobei in dem durch den Abstand gebildeten Spalt die Schubfeder 4 angeordnet ist. Der Dichtring 2 hat auf der dem abzudichtenden Raum 29 radial zugewandten Seite eine Axiaidichtlippe 3, der in Richtung der Umgebung 28 radial innenseitig die weitere erste Axialdichtlippe 20 und weiter radial innenseitig in Richtung der Umgebung 29 die weitere zweite Axialdichtlippe 21 nachgeschaltet sind.

Im hier gezeigten Ausführungsbeispiel berührt nur die Axialdichtlippe 3 die abzudichtende Oberfläche 24 des Radialflanschs 25 des Laufrings 26 unter elastischer axialer Vorspannung dichtend, während die beiden weiteren Axialdichtlippen 20, 21 der abzudichtenden Fläche 24 jeweils mit axialem Abstand 22.1, 22.2 benachbart zugeordnet sind.

Die axiale Vorspannung, mit der die Axialdichtlippe 3 an die abzudichtende Fläche 24 des Radialflanschs 25 des Laufrings 26 angedrückt wird, wird durch die Schubfeder 4 erreicht, die aus einem elastomeren Werkstoff besteht.
Die Schubfeder 4 und der Stützkörper 1 schließen einen spitzen Winkel 5 ein, der in Richtung der Axialdichtlippen 3, 20, 21 offenen ist. Im herstellungsbedingten Zustand beträgt der Winkel 5 im gezeigten Ausführungsbeispiel 60°, im eingebauten Zustand demgegenüber 75°.
Das Verhältnis von axialer Länge 7 zu radialer Breite 6 der Schubfeder 4 beträgt im dargestellten Ausführungsbeispiel etwa 1.

Der Stützkörper 4 umfasst einen Kern 8 aus einem metallischen Werkstoff, der von der ersten Ummantelung 9 vollständig umschlossen ist.

Der Dichtring 2 weist einen Versteifungsring 10 auf, der im hier dargestellten Ausführungsbeispiel aus einem ferromagnetischen Material besteht und von der zweiten Ummantelung 11 ebenfalls vollständig umschlossen ist.
Die beiden Ummantelungen 9, 11 bestehen jeweils aus einem elastomeren Werkstoff, hier demselben Werkstoff, aus dem auch die Schubfeder 4 und die Axialdichtlippen 3, 20, 21 bestehen. Die Schubfeder 4, die Axialdichtlippen 3, 20, 21 und die beiden Ummantelungen 9, 11 sind einstückig ineinander übergehend und materialeinheitlich ausgebildet.

Die Axialdichtlippe 3, die weitere erste Axialdichtlippe 20 und die weitere zweite Axialdichtlippe 21 sind der abzudichtenden Oberfläche 17 mit stufenweise vergrößertem axialen Abstand 22, 22.1, 22.2 benachbart zugeordnet, wobei die weitere erste Axialdichtlippe 20 und die weitere zweite Axialdichtlippe 21 jeweils als Reservedichtlippen ausgebildet sind und die abzudichtende Fläche 24 erst dann dichtend anliegend berühren, wenn die funktionstechnisch jeweils vorgeschaltete Axialdichtlippe zumindest teilweise verschlissen ist.

Von entscheidender Bedeutung ist, dass zusätzlich zum klassischen Fördermechanismus durch Verzerrung der Dichtkante der Rückförderdrall 12 und eine Fliehkraft auf das im Dichtspalt befindliche abzudichtende Medium wirkt, durch Rotation des Laufrings 26 oder durch Rotation des Dichtrings 2. Speziell durch die zusätzliche Fliehkraft, die auf das abzudichtende Medium innerhalb des Dichtspalts ausgeübt wird, kann die axiale Anpressung der Axialdichtlippen 3, 20, 21 an die abzudichtende Fläche 24 des Radialflanschs 25 vergleichsweise gering sein, mit dem Vorteil niedrigen Verschleißes und geringer Wärmeentwicklung.

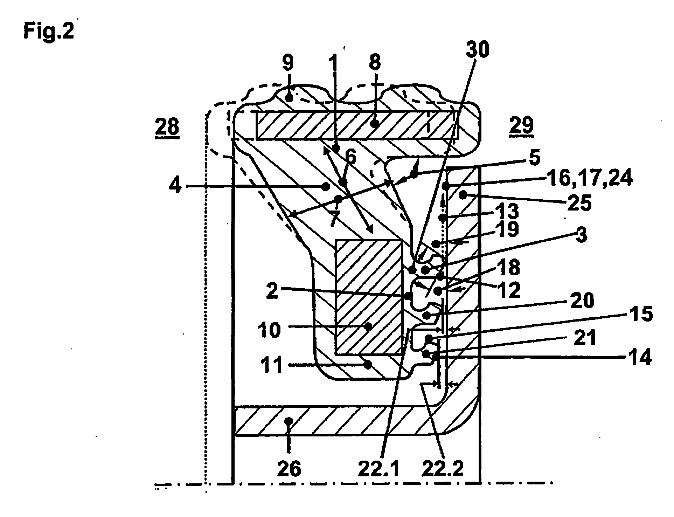

In Fig. 2 ist ein Ausschnitt aus dem Dichtring 2 aus Fig. 1 gezeigt, wobei die Axialdichtlippen 3, 20, 21 abweichend ausgebildet sind.

Die Axialdichtlippen 3, 20, 21 sind derart ausgebildet, dass ihre jeweiligen Dichtkanten bezogen auf den jeweiligen Gelenkpunkt 30 in Richtung des abzudichtenden Raums 29 radial versetzt angeordnet sind. Durch ein derartiges Axialdichtlippendesign wird die bewährte Dichtlippengeometrie von Radialwellendichtringen mit Ringwendelfeder nachgebildet und deren Funktionsvorteile übernommen.

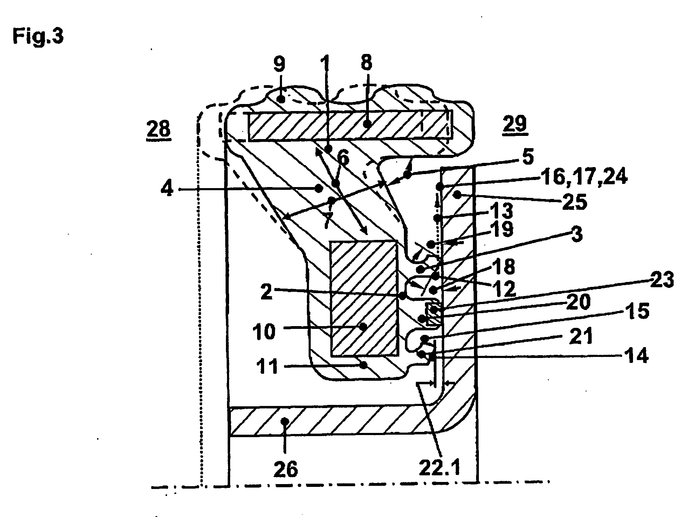

In Fig. 3 ist ein weiteres Ausführungsbeispiel der Axialdichtlippen 3, 20, 21 gezeigt.

Abweichend vom Ausführungsbeispiel aus Fig. 2 ist die weitere erste Axialdichtlippe 20 als Gleitringdichtung 23 ausgebildet, wobei die Gleitringdichtung 23 aus Siliciumcarbid besteht und einerseits für eine Abdichtung des Dichtspalts zwischen dem Dichtring 2 und der abzudichtenden Fläche 24 des Radialflanschs 25 sorgt und andererseits für eine gute Führung des Dichtrings 2, bezogen auf die abzudichtende Fläche 24. Im hier gezeigten Ausführungsbeispiel berühren sowohl die Axialdichtlippe 3 als auch die Gleitringdichtung 23 die abzudichtende Fläche 24 des Radialflanschs 25 des Laufrings 26.

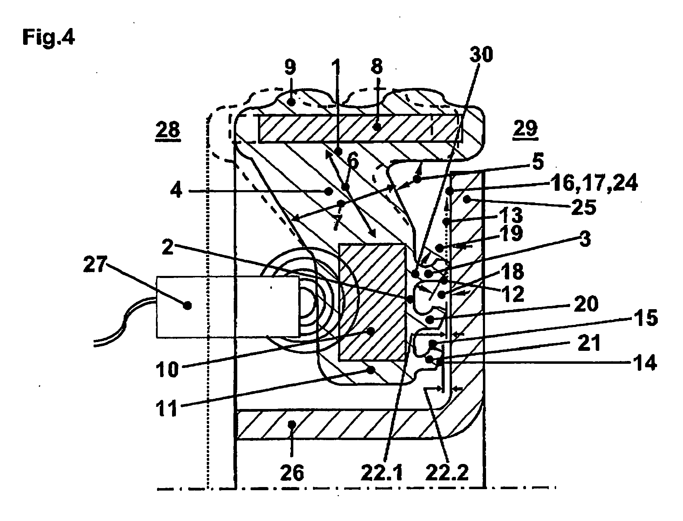

In Fig. 4 umfasst die dem abzudichtenden Raum 29 axial abgewandte Dichtungsanordnung einen Versteifungsring 10 aus einem ferromagnetischen Werkstoff, dem auf der der Axialdichtlippen 3, 20, 21 axial abgewandten Seite ein schaltbarer Magnetgeber 27 zugeordnet ist. Wird der Magnetgeber 27 geschaltet, kann die Anpresskraft der zur Anwendung gelangenden Axialdichtlippen 3, 20, 21 an die abzudichtende Fläche 24 bedarfsweise erhöht oder reduziert werden. Der Magnetgeber 27 und die Schubfeder 4 sind in einer funktionstechnischen Parallelschaltung angeordnet. Ein solcher schaltbarer Dichtring ist beispielsweise dann von Vorteil, wenn die Anpress kraft und Reibverlustleistung gesteuert beziehungsweise geregelt werden soll, der Dichtkantenverschleiß nach einer gewissen Lebensdauer kompensiert werden soll, eine weitere, zusätzliche Dichtkante nach einer gewissen Lebensdauer oder bei Leckage hinzu geschaltet werden soll oder dieselbe Dichtung für unterschiedliche Anwendungsfälle eingesetzt werden soll.

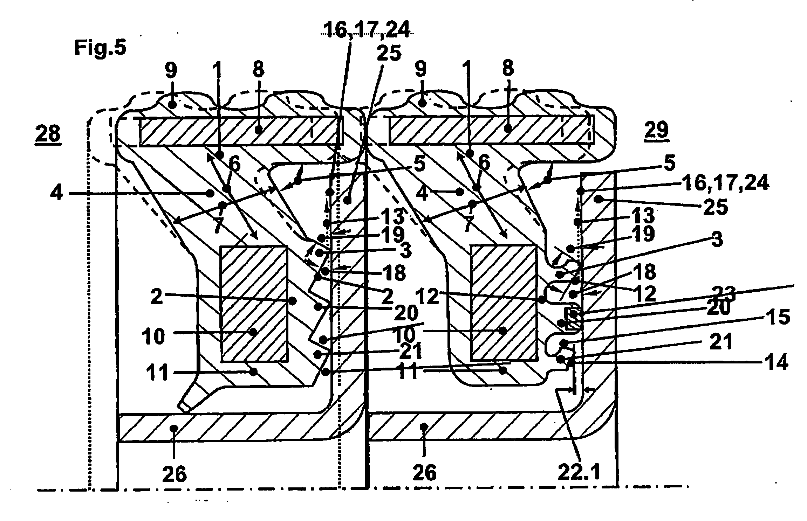

In Fig. 5 ist eine Tandem-Dichtungsanordnung gezeigt, die zwei Dichtungsanordnungen umfasst, wie zuvor beschrieben, wobei die beiden Dichtungsanordnungen in einer funktionstechnischen Reihenschaltung angeordnet sind. Die Dichtungsanordnungen und die Dichtungen selbst können jeweils ausgebildet sein, wie zuvor beschrieben. Die Dichtungsanordnung, die der Umgebung 28 zugewandt ist, hat einen ferromagnetischen Versteifungsring 10, dem auf der den Axialdichtlippen 3, 20, 21 axial abgewandten Seite ein schaltbarer Magnetgeber 27 zugeordnet ist. Wird der Magnetgeber 27 geschaltet, kann die Anpresskraft der zur Anwendung gelangenden Axialdichtlippen 3, 20, 21 an die abzudichtende Fläche 24 bedarfsweise erhöht oder reduziert werden. Der Magnetgeber 27 und die Schubfeder 4 sind in einer funktionstechnischen Parallelschaltung angeordnet.

## Patentansprüche

1. Dichtung, umfassend einen Stützkörper (1) und einen Dichtring (2) mit zumindest einer Axialdichtlippe (3), wobei der Stützkörper (1) und der Dichtring (2) einander mit radialem Abstand benachbart zugeordnet und durch eine als Anpresselement für die Axialdichtlippe (3) ausgebildete Schubfeder (4) aus elastomerem Werkstoff verbunden sind, wobei die Schubfeder (4) und der Stützkörper (1) einen spitzen Winkel (5) einschließen, der in Richtung der Axialdichtlippe (3) offen ist, wobei der Axialdichtlippe (3) radial innenseitig eine weitere erste Axialdichtlippe (20) in einer funktionstechnischen Reihenschaltung nachgeschaltet ist und wobei der weiteren ersten Axialdichtlippe (20) radial innenseitig eine weitere zweite Axialdichtlippe (21) in einer funktionstechnischen Reihenschaltung nachgeschaltet ist, **dadurch gekennzeichnet, dass** die Axialdichtlippe (3), die weitere erste Axialdichtlippe (20) und die weitere zweite Axialdichtlippe (21) einer gedachten Radialebene (16) mit stufenweise vergrößertem axialem Abstand (22, 22.1, 22.2) benachbart zugeordnet sind.

2. Dichtung nach Anspruch 1, **dadurch gekennzeichnet, dass** die weitere erste Axialdichtlippe (20) und die weitere zweite Axialdichtlippe (21) jeweils Reservedichtlippen bilden.

3. Dichtung, umfassend einen Stützkörper (1) und einen Dichtring (2) mit zumindest einer Axialdichtlippe (3), wobei der Stützkörper (1) und der Dichtring (2) einander mit radialem Abstand benachbart zugeordnet und durch eine als Anpresselement für die Axialdichtlippe (3) ausgebildete Schubfeder (4) aus elastomerem Werkstoff verbunden sind, wobei die Schubfeder (4) und der Stützkörper (1) einen spitzen Winkel (5) einschließen, der in Richtung der Axialdichtlippe (3) offen ist, wobei der Axialdichtlippe (3) radial innenseitig eine weitere erste Axialdichtlippe (20) in einer funktionstechnischen Reihenschaltung nachgeschaltet ist, und wobei der weiteren ersten Axialdichtlippe (20) radial innenseitig eine weitere zweite Axialdichtlippe (21) in einer funktionstechnischen Reihenschaltung nachgeschaltet ist, **dadurch gekennzeichnet, dass** die weitere erste Axialdichtlippe (20) als Gleitringdichtung (23) ausgebildet ist.

4. Dichtung nach einem der Ansprüche 1 bis 3, **dadurch gekennzeichnet, dass** der Winkel (5) herstellungsbedingt 40° bis 80° beträgt.

5. Dichtung nach einem der Ansprüche 1 bis 4, **dadurch gekennzeichnet, dass** die Schubfeder (4) - im Längsschnitt betrachtet - ein Verhältnis von axialer Länge (7) zu radialer Breite (6) aufweist, das 3 bis 1/3 beträgt.

6. Dichtung nach einem der Ansprüche 1 bis 5, **dadurch gekennzeichnet, dass** der Stützkörper (4) einen Kern (8) aus zähhartem Werkstoff aufweist, der von einer ersten Ummantelung (9) aus elastomerem Werkstoff vollständig umschlossen ist.

7. Dichtung nach einem der Ansprüche 1 bis 6, **dadurch gekennzeichnet, dass** der Dichtring (2) einen Versteifungsring (10) aufweist, der innerhalb des Dichtrings (2) axial benachbart zur Axialdichtlippe (3) angeordnet ist und deren radiale Erstreckung in radialer Richtung überdeckt und dass der Versteifungsring (10) von einer zweiten Ummantelung (11) aus elastomerem Werkstoff vollständig umschlossen ist.

8. Dichtung nach Anspruch 7, **dadurch gekennzeichnet, dass** der Versteifungsring (10) aus einem ferromagnetischen Werkstoff besteht.

9. Dichtung nach einem der Ansprüche 1 bis 8, **dadurch gekennzeichnet, dass** die Schubfeder (4), die Axialdichtlippe (3) und die beiden Ummantelungen (9, 11) einstückig ineinander übergehend und materialeinheitlich ausgebildet sind.

10. Dichtung nach einem der Ansprüche 1 bis 9, **dadurch gekennzeichnet, dass** die Axialdichtlippe (3) einen Rückförderdrall (12) für ein abzudichtendes Medium radial nach außen (13) aufweist.

11. Dichtung nach einem der Ansprüche 1 bis 10, **dadurch gekennzeichnet, dass** die Axialdichtlippe (3) durch zwei einander durchschneidende Kegelflächen (14, 15) begrenzt ist, wobei die radial innere erste Kegelfläche (14) mit einer gedachten Radialebene (16), die einer abzudichtenden Oberfläche (17) entspricht, einen ersten Winkel (18) einschließt, der kleiner ist, als ein zweiter Winkel (19), den die radial äußere zweite Kegelflächen (15) mit der gedachten Radialebene (16) einschließt.

12. Dichtung nach einem der Ansprüche, 2 und 4 bis 11, wenn nicht von Anspruch 3 abhängig, **dadurch gekennzeichnet, dass** alle Axialdichtlippen (3, 20, 21) einen entsprechend ausgebildeten Rückförderdrall (12) und entsprechend ausgebildete erste und zweite Kegelflächen (14, 15) aufweisen.

13. Dichtungsanordnung, umfassend eine Dichtung nach einem der Ansprüche 1 bis 12, **dadurch gekennzeichnet, dass** der Winkel (5) während der bestimmungsgemäßen Verwendung der Dichtung 50° bis 90° beträgt.

14. Dichtungsanordnung nach Anspruch 13, **dadurch gekennzeichnet, dass** die gedachte Radialebene (16) einer abzudichtenden Fläche (24) eines Radialflanschs (25) eines Laufrings (26) entspricht und dass zumindest die Axialdichtlippe (3) oder die Axialdichtlippe (3) und die Gleitringdichtung (23) die abzudichtende Fläche (24) unter elastischer axialer Vorspannung dichtend anliegend berühren.

15. Dichtungsanordnung nach einem der Ansprüche 13 oder 14, **dadurch gekennzeichnet, dass** dem ferromagnetischen Versteifungsring (10) auf der der Axialdichtlippe (3) axial abgewandten Seite ein schaltbarer Magnetgeber (27) zur bedarfsweisen Erhöhung oder Reduzierung der Anpresskraft der zumindest einen Axialdichtlippe (3, 20, 21) zugeordnet ist.

16. Dichtungsanordnung nach Anspruch 15, **dadurch gekennzeichnet, dass** der Magnetgeber (27) und die Schubfeder (4) in einer funktionstechnischen Parallelschaltung angeordnet sind.

## Claims

1. Seal, comprising a supporting body (1) and a sealing ring (2) with at least one axial sealing lip (3), wherein the supporting body (1) and the sealing ring (2) are assigned adjacent to each other at a radial distance and are connected by a thrust spring (4), which is designed as a press-on element for the axial sealing lip (3) and is composed of elastomer material, wherein the thrust spring (4) and the supporting body (1) enclose an acute angle (5) which is open in the direction of the axial sealing lip (3), wherein a further first axial sealing lip (20) is connected downstream of the axial sealing lip (3) radially on the inside in a technically functional series connection, and wherein a further second axial sealing lip (21) is connected downstream of the further first axial sealing lip (20) radially on the inside in a technically functional series connection, **characterized in that** the axial sealing lip (3), the further first axial sealing lip (20) and the further second axial sealing lip (21) are assigned adjacent to an imaginary radial plane (16) at an axial distance (22, 22.1, 22.2) which is increased in a stepwise manner.

2. Seal according to Claim 1, **characterized in that** the further first axial sealing lip (20) and the further second axial sealing lip (21) each form reserve sealing lips.

3. Seal, comprising a supporting body (1) and a sealing ring (2) with at least one axial sealing lip (3), wherein the supporting body (1) and the sealing ring (2) are assigned adjacent to each other at a radial distance and are connected by a thrust spring (4), which is designed as a press-on element for the axial sealing lip (3) and is composed of elastomer material, wherein the thrust spring (4) and the supporting body (1) enclose an acute angle (5) which is open in the direction of the axial sealing lip (3), wherein a further first axial sealing lip (20) is connected downstream of the axial sealing lip (3) radially on the inside in a technically functional series connection, and wherein a further second axial sealing lip (21) is connected downstream of the further first axial sealing lip (20) radially on the inside in a technically functional series connection, **characterized in that** the further first axial sealing lip (20) is designed as a sliding ring seal (23).

4. Seal according to one of Claims 1 to 3, **characterized in that** the angle (5) is 40° to 80° for production reasons.

5. Seal according to one of Claims 1 to 4, **characterized in that** the thrust spring (4) - as viewed in longitudinal section - has a ratio of axial length (7) to radial width (6) of 3 to 1/3.

6. Seal according to one of Claims 1 to 5, **characterized in that** the supporting body (4) has a core (8) of tough material, which is completely enclosed by a first sheath (9) of elastomer material.

7. Seal according to one of Claims 1 to 6, **characterized in that** the sealing ring (2) has a stiffening ring (10) which is arranged within the sealing ring (2) axially adjacent to the axial sealing lip (3) and covers the radial extent of the latter in the radial direction, and **in that** the stiffening ring (10) is completely enclosed by a second sheath (11) of elastomer material.

8. Seal according to Claim 7, **characterized in that** the stiffening ring (10) is composed of a ferromagnetic material.

9. Seal according to one of Claims 1 to 8, **characterized in that** the thrust spring (4), the axial sealing lip (3) and the two sheaths (9, 11) are formed from the same material and such that they merge integrally into one another.

10. Seal according to one of Claims 1 to 9, **characterized in that** the axial sealing lip (3) has a return spiral (12) for a medium to be sealed off radially to the outside (13).

11. Seal according to one of Claims 1 to 10, **characterized in that** the axial sealing lip (3) is bounded by two mutually intersecting conical surfaces (14, 15), the radially inner, first conical surface (14) together with an imaginary radial plane (16), which corresponds to a surface (17) to be sealed off, enclosing a first angle (18) which is smaller than a second angle (19) which is enclosed by the radially outer, second conical surfaces (15) together with the imaginary radial plane (16).

12. Seal according to one of Claims 1, 2 and 4 to 11, when not dependent on Claim 3, **characterized in that** all of the axial sealing lips (3, 20, 21) have a correspondingly designed return spiral (12) and correspondingly designed first and second conical surfaces (14, 15).

13. Sealing assembly, comprising a seal according to one of Claims 1 to 12, **characterized in that** the angle (5) during correct use of the seal is 50° to 90°.

14. Sealing assembly according to Claim 13, **characterized in that** the imaginary radial plane (16) corresponds to a surface (24) to be sealed off from a radial flange (25) of a track ring (26), and **in that** at least the axial sealing lip (3) or the axial sealing lip (3) and the sliding ring seal (23) are in contact with the surface (24) to be sealed off in a manner bearing sealingly thereagainst under elastic axial prestress.

15. Sealing assembly according to either of Claims 13 and 14, **characterized in that** a switchable magnetic sensor (27) for increasing or reducing the press-on force of the at least one axial sealing lip (3, 20, 21) as required is assigned to the ferromagnetic stiffening ring (10) on the side facing away axially from the axial sealing lip (3).

16. Sealing assembly according to Claim 15, **characterized in that** the magnetic sensor (27) and the thrust spring (4) are arranged in a technically functional parallel connection.

## Revendications

1. Joint, comprenant un corps de support (1) et une bague d'étanchéité (2) avec au moins une lèvre d'étanchéité axiale (3), le corps de support (1) et la bague d'étanchéité (2) étant associés l'un à côté de l'autre de manière espacée l'un de l'autre d'une distance radiale et étant connectés par un ressort de poussée (4) en matériau élastomère, réalisé sous forme d'élément de pressage pour la lèvre d'étanchéité axiale (3), le ressort de poussée (4) et le corps de support (1) formant un angle aigu (5), qui est ouvert dans la direction de la lèvre d'étanchéité axiale (3), la lèvre d'étanchéité axiale (3) étant suivie, du côté interne radialement, par une première lèvre d'étanchéité axiale supplémentaire (20), montée en série suivant une technique fonctionnelle, et la première lèvre d'étanchéité axiale supplémentaire (20) étant suivie, du côté radialement interne, par une deuxième lèvre d'étanchéité axiale supplémentaire (21) montée en série suivant une technique fonctionnelle, **caractérisé en ce que** la lèvre d'étanchéité axiale (3), la première lèvre d'étanchéité axiale supplémentaire (20) et la deuxième lèvre d'étanchéité axiale supplémentaire (21) sont associées les unes à côté des autres à un plan radial imaginaire (16) de manière espacée d'une distance axiale (22, 22.1, 22.2) croissante de manière échelonnée.

2. Joint selon la revendication 1, **caractérisé en ce que** la première lèvre d'étanchéité axiale supplémentaire (20) et la deuxième lèvre d'étanchéité axiale supplémentaire (21) forment à chaque fois des lèvres d'étanchéité de réserve.

3. Joint, comprenant un corps de support (1) et une bague d'étanchéité (2) avec au moins une lèvre d'étanchéité axiale (3), le corps de support (1) et la bague d'étanchéité (2) étant associés l'un à côté de l'autre de manière espacée l'un de l'autre d'une distance radiale et étant connectés par un ressort de poussée (4) en matériau élastomère, réalisé sous forme d'élément de pressage pour la lèvre d'étanchéité axiale (3), le ressort de poussée (4) et le corps de support (1) formant un angle aigu (5), qui est ouvert dans la direction de la lèvre d'étanchéité axiale (3), la lèvre d'étanchéité axiale (3) étant suivie, du côté interne radialement, par une première lèvre d'étanchéité axiale supplémentaire (20), montée en série suivant une technique fonctionnelle, et la première lèvre d'étanchéité axiale supplémentaire (20) étant suivie, du côté radialement interne, par une deuxième lèvre d'étanchéité axiale supplémentaire (21) montée en série suivant une technique fonctionnelle, **caractérisé en ce que** la première lèvre d'étanchéité axiale supplémentaire (20) est réalisée sous forme de joint à bague coulissante (23).

4. Joint selon l'une quelconque des revendications 1 à 3, **caractérisé en ce que** l'angle (5), du fait des exigences de fabrication, est compris entre 40° et 80°.

5. Joint selon l'une quelconque des revendications 1 à 4, **caractérisé en ce que** le ressort de poussée (4) - considéré en coupe longitudinale - présente un rapport de longueur axiale (7) à largeur radiale (6) qui est compris entre 3 et 1/3.

6. Joint selon l'une quelconque des revendications 1 à 5, **caractérisé en ce que** le corps de support (1) présente un noyau (8) en matériau tenace qui est complètement entouré par une première gaine (9) en matériau élastomère.

7. Joint selon l'une quelconque des revendications 1 à 6, **caractérisé en ce que** la bague d'étanchéité (2) présente une bague de rigidification (10) qui est disposée à l'intérieur de la bague d'étanchéité (2) axialement à côté de la lèvre d'étanchéité axiale (3), et qui recouvre son étendue radiale dans la direction radiale, et **en ce que** la bague de rigidification (10) est complètement entourée par une deuxième gaine (11) en matériau élastomère.

8. Joint selon la revendication 7, **caractérisé en ce que** la bague de rigidification (10) se compose d'un matériau ferromagnétique.

9. Joint selon l'une quelconque des revendications 1 à 8, **caractérisé en ce que** le ressort de poussée (4), la lèvre d'étanchéité axiale (3) et les deux gaines (9, 11) sont réalisés en se prolongeant d'une seule pièce les uns dans les autres et en le même matériau.

10. Joint selon l'une quelconque des revendications 1 à 9, **caractérisé en ce que** la lèvre d'étanchéité axiale (3) présente, radialement vers l'extérieur (13), une torsion de refoulement (12) pour un fluide à étancher.

11. Joint selon l'une quelconque des revendications 1 à 10, **caractérisé en ce que** la lèvre d'étanchéité axiale (3) est limitée par deux surfaces coniques (14, 15) se croisant, la première surface conique radialement interne (14) formant, avec un plan radial imaginaire (16) qui correspond à une surface à étancher (17), un premier angle (18) qui est inférieur à un deuxième angle (19) formé par les deuxièmes surfaces coniques radialement externes (15) avec le plan radial imaginaire (16).

12. Joint selon l'une quelconque des revendications 2 et 4 à 11, lorsqu'elles ne dépendent pas de la revendication 3, **caractérisé en ce que** toutes les lèvres d'étanchéité axiales (3, 20, 21) présentent une torsion de refoulement (12) réalisée de manière correspondante, et des premières et deuxièmes surfaces coniques (14, 15) réalisées de manière correspondante.

13. Agencement d'étanchéité, comprenant un joint selon l'une quelconque des revendications 1 à 12, **caractérisé en ce que** l'angle (5) pendant l'utilisation conforme du joint est compris entre 50° et 90°.

14. Agencement d'étanchéité selon la revendication 13, **caractérisé en ce que** le plan radial imaginaire (16) correspond à une surface à étancher (24) d'une bride radiale (25) d'une bague de roulement (26) et **en ce qu'**au moins la lèvre d'étanchéité axiale (3), ou la lèvre d'étanchéité axiale (3) et le joint à bague coulissante (23), viennent en appui de contact hermétique avec la surface à étancher (24) par précontrainte axiale élastique.

15. Agencement d'étanchéité selon l'une quelconque des revendications 13 ou 14, **caractérisé en ce que** la bague de rigidification (10) ferromagnétique est associée, du côté opposé axialement à la lèvre d'étanchéité axiale (3), à un capteur magnétique commutable (27) pour augmenter ou réduire, au besoin, la force de pressage de l'au moins une lèvre d'étanchéité axiale (3, 20, 21).

16. Agencement d'étanchéité selon la revendication 15, **caractérisé en ce que** le capteur magnétique (27) et le ressort de poussée (4) sont disposés dans un montage parallèle suivant une technique fonctionnelle.
